# FASCICULE DE BREVET EUROPEEN

(11) **EP 1 748 195 B1**
(45) Date de publication et mention de la délivrance du brevet: **19.03.2008**
(21) Numéro de dépôt: 06300789.2
(22) Date de dépôt: 11.07.2006
(51) Int. Cl.: A01K 97/22

(54) **Bague de blocage pour accessoire de pêche**
Klemmring für Angelzubehör
Locking ring for angling accessory

(30) Priorité: 26.07.2005 FR 0552311
(43) Date de publication de la demande: 31.01.2007
(73) Titulaire: Mossalgue, 77257 Brie Comte Robert Cedex (FR)
(72) Inventeur: Mossalgue, François, 94120 Fontenay s/Bois (FR)
(74) Mandataire: Livet, Marie-José

(56) Documents cités:
- FR-A- 2 845 740
- GB-A- 2 182 641
- US-A1- 2005 091 779

## Description

La présente invention concerne une bague de blocage pour accessoire de pêche.

Une telle bague de blocage est plus précisément susceptible de glisser le long d'un montant associé d'un panier siège de pêcheur et porte une tige support d'accessoire de pêche, notamment de bourriche, solidaire de celle-ci.

Les paniers sièges de pêcheurs sont classiquement équipés de quatre ou six pieds ou montants en règle générale tubulaires dont la fonction première est de permettre de régler la position du panier par rapport à la berge.

Les pêcheurs ont pris l'habitude de positionner sur ces montants ou sur des montants annexes solidarisés au panier siège différents supports d'accessoires (support de bourriche, support de cannes, de plates-formes, de tablettes, ...).

Ces supports d'accessoires comportent en règle générale une bague de blocage susceptible de glisser le long d'un montant associé et portant une tige support solidaire de celle-ci.

La bague peut être bloquée dans la position souhaitée au moyen d'un bouton à vis.

Le document FR-A-2845740 décrit une telle bague de blocage comportant un corps annulaire ouvert, un manchon de blocage pouvant se déplacer à l'intérieur du corps annulaire en position de rotation libre autour d'un montant et pouvant être bloqué en position de fixation par des moyens de verrouillage.

Il est essentiel que l'ensemble ainsi constitué soit très rigide et ne puisse en particulier pas se déplacer par rapport au montant.

Un montant peut ainsi porter toute une série de supports d'accessoires superposés sur sa longueur.

Au cours d'une partie de pêche, le pêcheur est amené à modifier son montage et à changer la position de ses accessoires.

Or, pour déplacer un accessoire, il lui est indispensable de démonter tous les autres supports d'accessoires montés au-dessus de celui-ci, voire de démonter le montant lui-même, ce qui correspond à des manipulations longues et fastidieuses.

Cette nécessité crée des difficultés particulières lorsque le support d'accessoire est un support de bourriche.

En effet, pendant les concours, les pêcheurs ont pris l'habitude de monter un support de bourriche à la partie inférieure d'un montant au-dessous du siège, de sorte que cette bourriche trempe dans l'eau.

Le pêcheur peut ainsi conserver les poissons qu'il prend dans la bourriche en leur permettant de continuer à respirer vu que celle-ci trempe dans l'eau.

A la fin du concours, le pêcheur doit démonter le plus rapidement possible le support de bourriche pour pouvoir procéder à la pesée.

Dans ce contexte, la présente invention a pour objet de remédier aux inconvénients susmentionnés en proposant un support d'accessoire pour pêcheur susceptible d'être fixé directement à n'importe quelle hauteur d'un montant associé sans nécessiter de procéder à l'« enfilement » traditionnel, et d'être démonté quasi instantanément tout en garantissant une rigidité suffisante du montage.

Un tel support d'accessoire pour pêcheur doit en outre ne pas présenter d'excroissance sur laquelle un fil de pêche ou un hameçon pourrait risquer de s'accrocher.

A cet effet, l'invention concerne une bague de blocage pour accessoire de pêche du type susmentionné, suivant la revendication 1, caractérisée en ce qu'elle comporte essentiellement un corps annulaire ouvert destiné à recevoir le montant associé et se prolongeant par un appendice tubulaire permettant la fixation de la tige support ainsi qu'un arceau de blocage monté coulissant le long de la face interne de ce corps annulaire.

Bien entendu l'invention n'est aucunement limitée à un support de bourriche et concerne tous les accessoires susceptibles d'être montés sur un panier siège.

Selon l'invention, l'arceau de blocage est susceptible de se déplacer entre une position de montage dans laquelle il libère l'ouverture du corps annulaire pour permettre sa mise en place autour du montant associé, une position de fermeture dans laquelle il obture l'ouverture du corps annulaire et une position de fixation dans laquelle il bloque ce corps le long du montant associé.

Des moyens de verrouillage permettent le déplacement de l'arceau de blocage en position de fixation.

Pour garantir un maintien suffisamment rigide de la bague de blocage sur le montant associé en position de fixation sans risque de déplacement le long de celui-ci, il est bien entendu essentiel que la géométrie du corps annulaire ainsi que la géométrie de l'arceau de blocage soient précisément adaptées à la section du montant associé.

A cet effet, le corps annulaire peut avantageusement être équipé d'une ouverture en forme de U comportant une branche centrale cintrée en arc de cercle et deux branches latérales rectilignes situées de part et d'autre de celle-ci.

Un corps annulaire ainsi conformé peut avantageusement coopérer avec un arceau de blocage lui aussi essentiellement en forme de U, mais ayant une forme asymétrique et comportant une branche centrale cintrée en un arc de cercle de diamètre identique au diamètre de la branche centrale de la face interne du corps annulaire de façon à pouvoir coulisser le long de celle-ci et située entre deux branches latérales de longueur différente.

La branche latérale de plus faible longueur ou branche de réglage qui demeure constamment à la partie interne du corps annulaire lors du déplacement de l'anneau de blocage entre ses différentes positions, présente de préférence un cintrage correspondant à celui de la branche centrale et situé dans son prolongement de manière à pouvoir coulisser le long de la face interne du corps annulaire.

La branche latérale de plus grande longueur ou branche de fermeture qui fait saillie à l'extérieur du corps annulaire en position de fermeture et en position de fixation pour obturer cette ouverture, est de préférence rectiligne.

Lors du déplacement de l'arceau de blocage de la position de fermeture à la position de fixation, la branche de réglage vient en appui contre la face interne de la branche centrale du corps annulaire et la branche de fermeture se rapproche de cette dernière branche de façon à exercer sur le montant associé emprisonné à la partie interne du corps annulaire, une pression permettant de bloquer la bague de blocage le long de ce montant.

Selon l'invention, les moyens de verrouillage de l'arceau de blocage sont avantageusement constitués par un perçage circonférentiel traversant prévu à la partie médiane du corps annulaire au niveau de la branche centrale de celui-ci et faisant office de canal de guidage pour une broche de réglage filetée solidaire de l'arceau de blocage ou d'un bouton de verrouillage monté à la partie externe du corps annulaire ainsi que par un orifice taraudé correspondant au filetage de la broche de réglage et situé sur le bouton de verrouillage ou sur l'arceau de blocage.

Les deux extrémités de ce perçage circonférentiel correspondent respectivement d'une part à la position de montage et d'autre part, aux positions de fermeture et de fixation.

La broche de réglage filetée peut bien entendu être solidaire soit de l'arceau de blocage, soit du bouton de verrouillage sans pour cela sortir du cadre de l'invention.

Toutefois, selon un mode de réalisation préférentiel de celle-ci, l'arceau de blocage est équipé, sur sa périphérie externe d'une broche de réglage dirigée essentiellement radialement et comportant une partie cylindrique pénétrant dans le perçage circonférentiel du corps annulaire et se prolongeant vers l'extérieur par un embout fileté coopérant avec un orifice taraudé correspondant du bouton de verrouillage.

L'utilisateur peut ainsi déplacer l'arceau de blocage entre la position de montage et la position de fermeture en saisissant le bouton de verrouillage et en le faisant glisser le long du perçage circonférentiel du corps annulaire et transférer cet arceau en position de fixation en vissant le bouton de verrouillage sur l'embout fileté de la broche de réglage.

Pour faciliter le positionnement de l'arceau de blocage en position de fermeture ou en position de fixation, le perçage circonférentiel du corps annulaire peut être muni, sur sa face externe et au niveau de son extrémité correspondant à ces positions, d'un évidement coopérant avec un téton de géométrie similaire prévu sur le bouton de verrouillage.

Il est de plus à noter que dans de nombreux cas (en particulier en présence d'un seul accessoire de pêche), l'utilisateur doit déplacer la bague de blocage le long du montant associé sans qu'il soit nécessaire de l'ouvrir en position de montage, c'est-à-dire manipuler cette bague comme une bague de blocage classique.

Pour permettre une telle manipulation, il est avantageux que l'ouverture de la bague ne se produise pas dès que l'utilisateur dévisse le bouton de verrouillage mais se déroule en deux étapes correspondant d'une part au desserrage ordinaire et d'autre part à la libération de l'ouverture du corps annulaire.

Il est par ailleurs à noter que conformément à l'invention, l'arceau de blocage peut avantageusement être amovible de sorte que la bague de blocage soit constituée de trois éléments indépendants, à savoir le corps annulaire, l'arceau de blocage et le bouton de verrouillage.

Ces éléments peuvent bien entendu être en un matériau quelconque sans pour cela sortir du cadre de l'invention ; le corps annulaire et le bouton de verrouillage peuvent à titre d'exemple être réalisés en un matériau synthétique rigide et l'arceau de blocage en métal.

Selon une autre caractéristique de l'invention, le corps annulaire est équipé à sa périphérie interne de deux rebords latéraux formant glissières permettant d'obtenir un positionnement plus précis de l'arceau de blocage le long de la face interne de ce corps.

Les caractéristiques de la bague de blocage pour accessoire de pêche qui fait l'objet de l'invention seront décrites plus en détail en se référant aux dessins annexés dans lesquels :
- la figure 1 est une vue en perspective représentant un panier siège,
- la figure 2 est une vue en perspective éclatée représentant les différents éléments consécutifs de la bague de blocage,
- la figure 3 est une vue en perspective représentant la bague de blocage en position de fixation,
- la figure 4 est une vue en perspective représentant la bague de blocage en position de montage,
- la figure 5 est une vue en perspective représentant la bague de blocage dans une position intermédiaire entre la position de montage et la position de fermeture,
- les figures 6 et 7 sont deux vues en perspective similaires mais sous deux angles différents expliquant les possibilités de translation de la bague de blocage en position de fermeture.

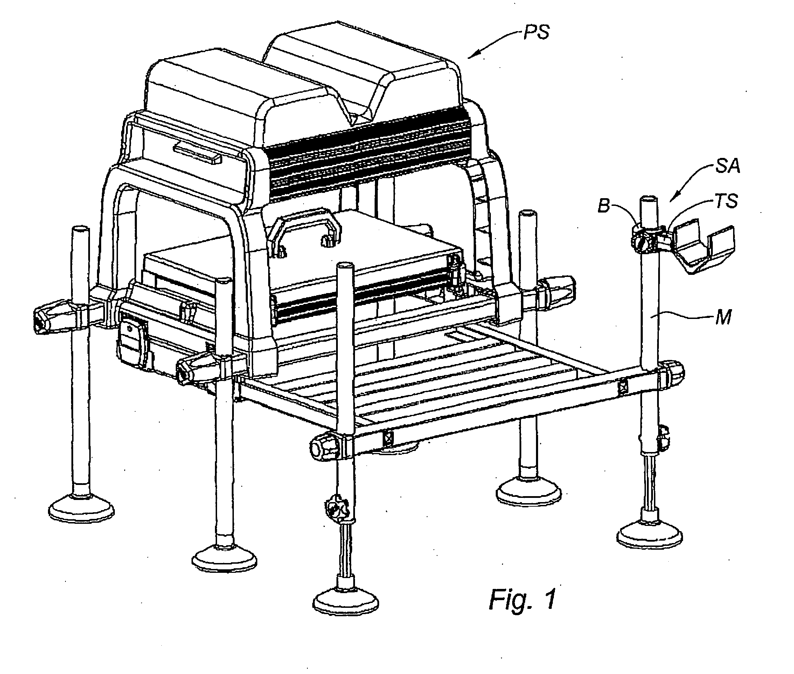

Selon la figure 1, le panier siège PS est équipé d'un support d'accessoire SA (support de canne) comportant une bague de blocage B susceptible de glisser le long d'un montant M associé et de se déplacer par rotation autour de ce montant.

Cette bague de blocage B porte une tige support TS solidaire de celle-ci.

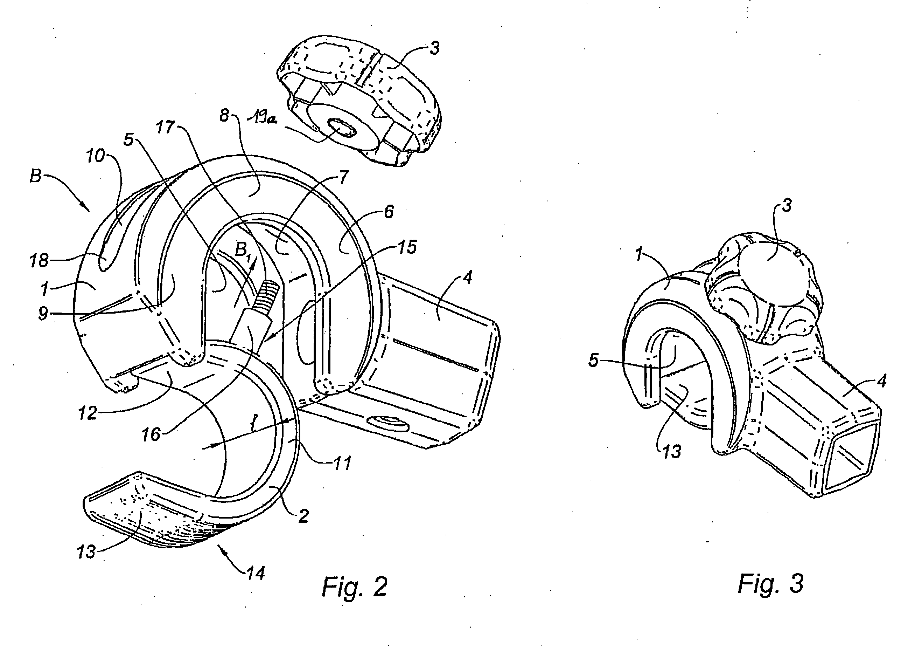

Selon la figure 2, la bague de blocage est constituée d'un corps annulaire ouvert 1, d'un arceau de blocage 2, et d'un bouton de verrouillage 3.

Le corps annulaire 1 se prolonge par un appendice tubulaire 4 permettant la fixation de la tige support d'accessoire de pêche non représentée et est équipé d'une ouverture 5 destinée à recevoir le montant associé.

L'ouverture 5 est en forme de U et comporte une branche centrale 8 cintrée en un arc de cercle située entre deux branches latérales rectilignes 9.

La face interne 7 de cette ouverture 5 est équipée de part et d'autre de deux rebords latéraux 6 formant glissières dont la fonction est de permettre de faciliter le positionnement et le déplacement de l'arceau de blocage 2 d'une manière qui sera décrite plus en détails dans la suite de cet exposé.

Le corps annulaire 1 comporte par ailleurs à sa partie médiane, au niveau de la branche centrale 8 de l'ouverture 5, un perçage circonférentiel traversant 10 dont la fonction sera là encore décrite plus précisément dans la suite de cet exposé.

Selon la figure 2, l'arceau de blocage 2 a la forme d'un U asymétrique et comporte une branche centrale 11 cintrée en un arc de cercle de diamètre identique au diamètre de la branche centrale 8 de la face interne du corps annulaire 1 de façon à pouvoir coulisser de long de celle-ci et située entre deux branches latérales 12, 13 de longueur différente.

La largeur 1 de l'arceau de blocage 2 correspond à celle de la face interne 7 de l'ouverture 5 du corps annulaire 1 de façon à permettre à cet anneau 2 de coulisser le long de cette face 7 entre les rebords latéraux 6.

La branche latérale 12 de plus faible longueur ou branche de réglage de l'arceau de blocage 2 présente un cintrage correspondant à celui de la branche centrale 11 et est située dans le prolongement de celle-ci de façon à pouvoir coulisser le long de la face interne 7 du corps annulaire 1.

La branche latérale 13 de plus grande longueur ou branche de fermeture est quant à elle rectiligne.

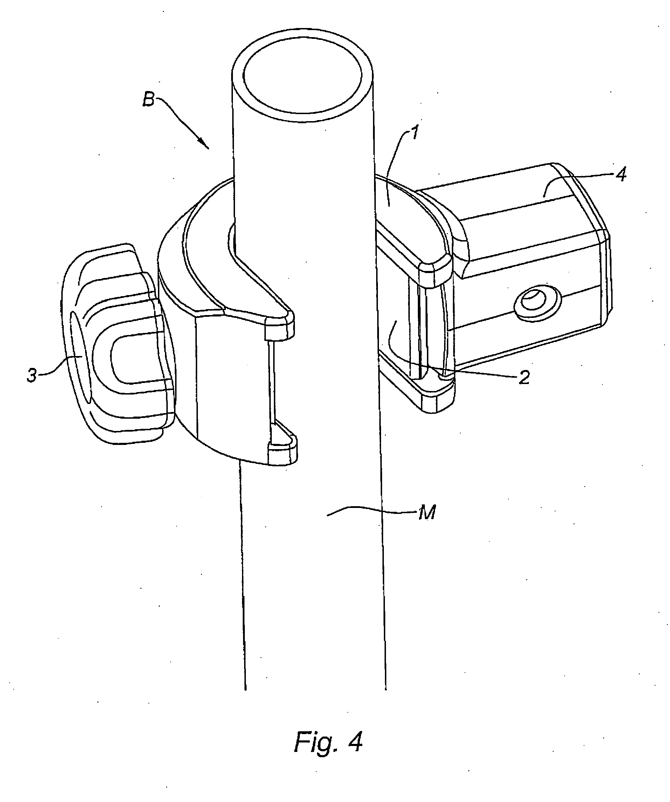

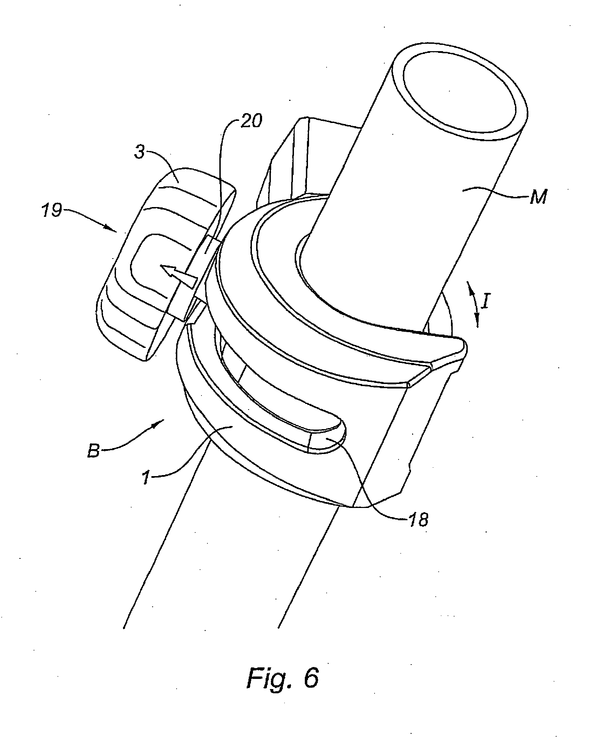

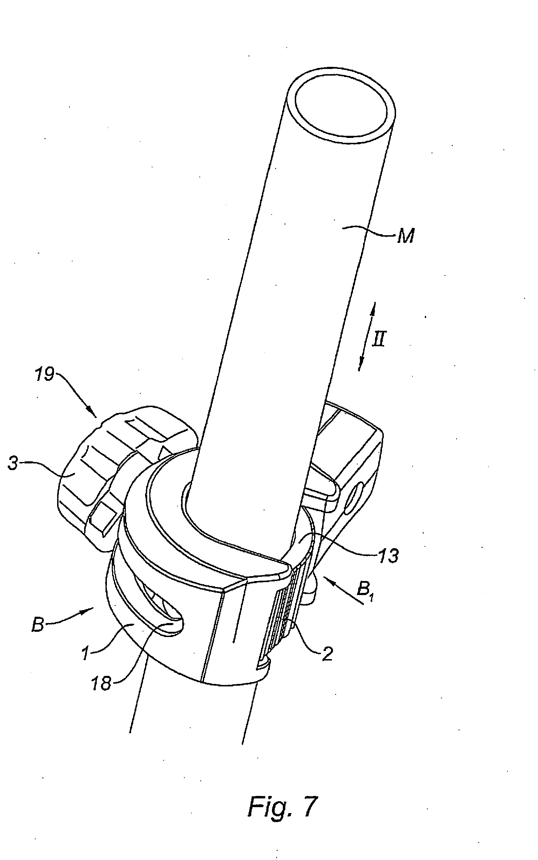

L'arceau de blocage 2 est susceptible de se déplacer entre une position de montage représentée sur la figure 4, dans laquelle il libère l'ouverture 5 du corps annulaire 1 pour permettre sa mise en place autour du montant M associé du panier siège, une position de fermeture représentée sur les figures 6 et 7 dans laquelle il obture cette ouverture 5 pour permettre d'emprisonner ce montant à la partie interne de la bague de blocage et une position de fixation représentée sur la figure 3 dans laquelle il bloque cette bague le long de ce montant.

En position de fermeture, la bague de blocage B peut se déplacer d'une part par rotation autour du montant M selon les flèches I (figure 6) ou d'autre part par translation le long de ce montant M selon les flèches II (figure 7).

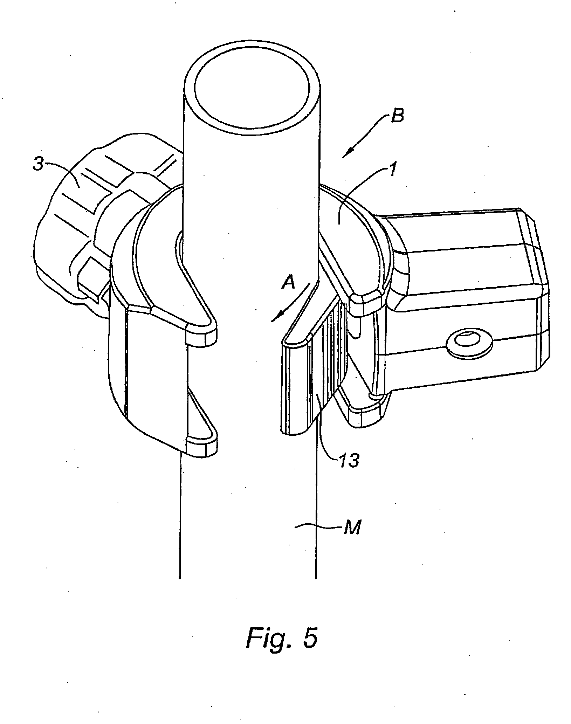

Selon les figures 4 à 7, lors du déplacement de l'arceau de blocage 2 entre la position de montage et la position de fermeture, la branche de réglage 12 demeure constamment à la partie interne du corps annulaire 1 alors que la branche de fermeture 13 vient en saillie à l'extérieur de l'ouverture 5 de ce corps 1 selon la flèche A (figure 5) de manière à obturer cette ouverture.

Lors du déplacement de l'arceau de blocage 2 de la position de fermeture à la position de fixation, la branche de réglage 12 vient en appui contre la face interne 7 de la branche centrale 8 du corps annulaire 1 selon la flèche B 1 (figures 2 et 7) et la branche de fermeture 13 se rapproche de cette branche centrale 8 de façon à exercer sur le montant M emprisonné à la partie interne du corps annulaire 1, une pression permettant de bloquer la bague de blocage le long de ce montant M.

Par ailleurs, et comme représenté sur la figure 2, l'arceau de blocage 2 est équipé sur sa périphérie externe 14 d'une broche de réglage 15 dirigée radialement et permettant le verrouillage de cet arceau 2 en position de fixation ou le déverrouillage de celui-ci.

La broche de réglage 15 comporte une partie cylindrique 16 par laquelle elle pénètre dans le perçage circonférentiel 10 du corps annulaire 1 et se prolonge par un embout fileté 17 faisant saillie vers l'extérieur.

L'embout fileté 17 coopère avec un orifice taraudé correspondant 19a équipant le bouton de verrouillage 3.

Compte tenu de cette configuration, le perçage circonférentiel 10 du corps annulaire 1 fait office de canal de guidage pour la partie cylindrique 16 de la broche de réglage 15 de façon à permettre à l'utilisateur de déplacer l'arceau de blocage 2 entre la position de montage et la position de fermeture en saisissant le bouton de verrouillage 3 et en le faisant glisser le long du perçage circonférentiel 10 du corps annulaire 1 puis, de transférer cet arceau 2 en position de fixation en vissant le boutant de verrouillage 3 sur l'embout fileté 17 de la broche de réglage 15.

De manière plus précise, une première extrémité 18 du perçage circonférentiel 10 correspond à la position de montage représentée sur la figure 4 tandis que la seconde extrémité 19 de ce perçage correspond aux positions de fermeture et de fixation représentées sur les figures 6, 7 et 3.

Selon la figure 6, le bouton de verrouillage 3 est muni d'un téton 20 dont la géométrie correspond à celle d'un évidement non représenté équipant la face externe du corps annulaire 1 au niveau de la seconde extrémité 19 du perçage circonférentiel 10.

Dans la position de fixation représentée sur la figure 3, le bouton de verrouillage 3 est totalement vissé sur l'embout fileté 17 et le téton 20 est inséré dans l'évidement de la seconde extrémité 19 du perçage circonférentiel 10.

Si à partir de cette position, on dévisse le bouton de verrouillage 3 de deux ou trois tours, le téton 20 reste maintenu dans l'évidement de la seconde extrémité 19 du perçage circonférentiel 10 mais l'ensemble constitué par le bouton de verrouillage 3 et l'arceau de blocage 2 acquiert une certaine liberté de translation schématisée par la flèche II (figure 7) par rapport au corps annulaire 1.

La bague de blocage B se trouve ainsi transférée de la position de fixation à la position de fermeture dans laquelle elle peut se déplacer par translation et par rotation le long et autour du montant B associé, son ouverture 5 demeurant fermée.

La poursuite du dévissage du bouton de verrouillage 3 entraîne le dégagement du téton 20 de l'évidement de la seconde extrémité 19 du perçage circonférentiel 10 de façon à permettre de déplacer l'ensemble constitué par le bouton de verrouillage 3 et l'arceau de blocage 2 le long de ce perçage circonférentiel jusqu'à la position de montage dans laquelle l'ouverture 5 est ouverte.

Bien entendu le transfert de la bague de blocage de la position de montage à la position de fermeture puis à la position de fixation s'effectue en sens inverse.

## Revendications

1. Bague de blocage susceptible de glisser le long d'un montant associé d'un panier siège de pêcheur et portant une tige support d'accessoire de pêche, notamment de bourriche solidaire de celle-ci
**caractérisée en ce qu'**
elle comporte :
- un corps annulaire (1) ouvert destiné à recevoir le montant associé et se prolongeant par un appendice tubulaire (4) permettant la fixation de la tige support,
- un arceau de blocage (2) monté coulissant le long de la face interne du corps annulaire de façon à pouvoir se déplacer entre une position de montage dans laquelle il libère l'ouverture (5) du corps annulaire (1) pour permettre sa mise en place autour du montant associé, une position de fermeture dans laquelle il obture l'ouverture du corps annulaire (1) et une position de fixation dans laquelle il bloque ce corps (1) le long du montant de l'arceau,
- des moyens de verrouillage permettant le déplacement de l'arceau de blocage (2) en position de fixation

2. Bague de blocage selon la revendication 1,
**caractérisée en ce que**
les moyens de verrouillage de l'arceau de blocage (2) sont constitués par un perçage circonférentiel traversant (10) prévu à la partie médiane du corps annulaire (1) et faisant office de canal de guidage pour une broche de réglage filetée (15) solidaire de l'arceau de blocage (2) ou d'un bouton de verrouillage (3) monté à la partie externe du corps annulaire (2) ainsi que par un orifice taraudé (19a) correspondant au filetage (17) de la broche (15) et situé sur le bouton de verrouillage (3) ou sur l'arceau de blocage (2).

3. Bague de blocage selon la revendication 2,
**caractérisée en ce que**
l'arceau de blocage (2) est équipé sur sa périphérie externe (14) d'une broche de réglage (15) dirigée essentiellement radialement et comportant une partie cylindrique (16) pénétrant dans le perçage circonférentiel (10) du corps annulaire (1) et se prolongeant vers l'extérieur par un embout fileté (17) coopérant avec un orifice taraudé correspondant (19a) du bouton de verrouillage (3) de façon à permettre à l'utilisateur de déplacer l'arceau de blocage (2) entre la position de montage et la position de fermeture en saisissant le bouton de verrouillage (3) et en le faisant glisser le long du perçage circonférentiel (10) du corps annulaire (1) et de transférer cet arceau (2) en position de fixation en vissant le bouton de verrouillage (3) sur l'embout fileté (17) de la broche de réglage (15).

4. Bague de blocage selon la revendication 3,
**caractérisée en ce que**
le perçage circonférentiel (10) est muni sur sa face externe et au niveau de l'une de ses extrémités (19) qui correspond aux positions de fermeture et de fixation d'un évidement coopérant avec un téton (20) de géométrie similaire prévu sur le bouton de verrouillage (3).

5. Bague de blocage selon l'une quelconque des revendications 1 à 4,
**caractérisée en ce que**
l'arceau de blocage (2) est amovible.

6. Bague de blocage selon l'une quelconque des revendications 1 à 5,
**caractérisée en ce que**
le corps annulaire (1) est équipé à sa périphérie interne de deux rebords latéraux (6) formant glissières pour l'arceau de blocage (2).

## Claims

1. Locking ring designed to slide along an upright co-operating with an angler's basket seat and bearing a support rod for an angling accessory, in particular a fish basket integral therewith,
**characterised in that**
it comprises:
- an open, annular body (1) designed to accommodate the co-operating upright and extended by a tubular appendage (4) enabling the support rod to be secured,
- a blocking arch (2) mounted so as to slide along the internal face of the annular body so that it can be moved between a fitting position, in which it releases the opening (5) of the annular body (1) enabling it to be fitted around the co-operating upright, a closed position, in which it closes the opening of the annular body (1), and a fixing position, in which it blocks this body (1) along the upright of the arch,
- locking means enabling the blocking arch (2) to be moved into a fixing position.

2. Locking ring as claimed in claim 1,
**characterised in that**
the locking means of the blocking arch (2) comprise a continuous circumferential orifice (10) disposed in the median part of the annular body (1) and serving as a guide passage for a threaded adjusting pin (15) integral with the blocking arch (2) or a locking button (3) mounted on the external part of the annular body (2), as well as a tapped orifice (19a) complementing the thread (17) of the pin (15) and disposed on the locking button (3) or on the blocking arch (2).

3. Locking ring as claimed in claim 2,
**characterised in that**
the blocking arch (2) is equipped with an essentially radially directed adjusting pin (15) on its external periphery (14) with a cylindrical part (16) which extends through the circumferential orifice (10) of the annular body (1) and is extended towards the exterior by means of a threaded end-piece (17) co-operating with a complementary tapped orifice (19a) of the locking button (3) to enable the user to move the blocking arch (2) between the fitting position and the closed position, by taking hold of the locking button (3) and sliding it along the circumferential orifice (10) of the annular body (1), and to transfer this arch (2) to the fixing position by screwing the locking button (3) onto the threaded end-piece (17) of the adjusting pin (15).

4. Locking ring as claimed in claim 3,
**characterised in that**
the circumferential orifice (10) is provided with a recess in its external face and on a level with one of its ends (19) corresponding to the closing and fixing positions, co-operating with a locating pin (20) with a similar geometry disposed on the locking button (3).

5. Locking ring as claimed in any one of claims 1 to 4,
**characterised in that**
the blocking arch (2) is detachable.

6. Locking ring as claimed in any one of claims 1 to 5,
**characterised in that**
the annular body (1) is provided with two lateral ridges (6) on its internal periphery forming slides for the blocking arch (2).

## Patentansprüche

1. Klemmring für Angelzubehör, der entlang eines entsprechenden Stuhlpfostens eines Anglerkorbsitzes gleitbar ist und eine daran angebrachte Haltestange für Angelzubehör, insbesondere für einen Korb, hält,
**dadurch gekennzeichnet, daß** er aufweist:
- einen den entsprechenden Stuhlpfosten aufnehmenden offenen ringförmigen Körper (1), der durch einen rohrförmigen Fortsatz (4) verlängert ist, der die Befestigung der Haltestange erlaubt,
- einen Klemmbügel (2), der entlang der Innenfläche des ringförmigen Körpers gleitend angebracht ist, so daß er zwischen einer Anbringposition, in welcher er die Öffnung des ringförmigen Körpers (1) freigibt, um dessen Anordnen um den entsprechenden Stuhlpfosten herum zu erlauben, einer Schließposition, in welcher er die Öffnung des ringförmigen Körpers (1) verschließt, und einer Befestigungsposition, in welcher er diesen Körper (1) entlang des entsprechenden Stuhlpfostens arretiert, bewegbar ist,
- Verriegelungsmittel, die das Verschieben des Klemmbügels (2) in eine Arretierungsposition erlauben.

2. Klemmring nach Anspruch 1, **dadurch gekennzeichnet, daß** die Mittel zum Verriegeln des Klemmbügels (2) aus einer durchgehenden Umfangsbohrung (10) bestehen, die an dem zentralen Abschnitt des ringförmigen Körpers (1) vorgesehen ist und als Führungskanal für eine mit einem Gewinde versehene Einstellspindel (15) dient, die mit dem Klemmbügel (2) oder einem an dem äußeren Teil des ringförmigen Körpers (2) angebrachten Verriegelungsknopf (3) verbunden ist, sowie aus einer an dem Verriegelungsknopf (3) oder dem Klemmbügel (2) angeordneten Öffnung (19a) bestehen, die mit einem Gewinde versehen ist, das zu dem Gewinde (17) der Spindel (15) passend ist.

3. Klemmring nach Anspruch 2, **dadurch gekennzeichnet, daß** der Klemmbügel (2) an seinem Außenumfang (14) mit einer Einstellspindel (15) ausgestattet ist, die sich im wesentlichen radial erstreckt ist und einen zylindrischen Teil (16) aufweist, der in die Umfangsbohrung (15) des ringförmigen Körpers (1) eindringt und nach außen durch ein Gewindestück (17) verlängert ist, das mit einer mit einem dem Verriegelungsknopf (3) entsprechenden Gewinde versehenen Öffnung (19a) zusammenwirkt, um so dem Benutzer zu erlauben, den Klemmbügel (2) zwischen der Anbringposition und der Schließposition zu bewegen, indem er den Verriegelungsknopf (3) greift und ihn entlang der Umfangsbohrung (10) des ringförmigen Körpers (1) gleiten läßt, und diesen Bügel (2) in die Befestigungsposition zu bringen, indem er den Verriegelungsknopf (3) auf das Gewindestück (17) der Einstellspindel (15) schraubt.

4. Klemmring nach Anspruch 3, **dadurch gekennzeichnet, daß** die Umfangsbohrung (10) an ihrer Außenfläche und an einem ihrer Enden (19), die den Schließ- und Befestigungspositionen entsprechen, mit einer Aussparung versehen ist, die mit einem an dem Verriegelungsknopf (3) vorgesehenen Vorsprung (20) einer ähnlichen Geometrie zusammenwirkt.

5. Klemmring nach einem der Ansprüche 1 bis 4, **dadurch gekennzeichnet, daß** der Klemmbügel (2) abnehmbar ist.

6. Klemmring nach einem der Ansprüche 1 bis 5, **dadurch gekennzeichnet, daß** der ringförmige Körper (1) an seinem Innenumfang mit zwei seitlichen Leisten (6) ausgestattet ist, die Gleitschienen für den Klemmbügel (2) bilden.
